# FASCICULE DE BREVET EUROPEEN

(11) **EP 1 288 706 B1**
(45) Date de publication et mention de la délivrance du brevet: **28.04.2010**
(21) Numéro de dépôt: 02292095.3
(22) Date de dépôt: 26.08.2002
(51) Int. Cl.: G03B 15/06

(54) **Dispositif d'acquisition d'au moins une image d'au moins une partie du visage ou de la chevelure d'une personne**
Vorrichtung zur Herstellung von mindestens einem Bild von mindestens einem Gesichtsteil oder den Haaren einer Person
Device for making at least an image of at least a part of the face or of the hair of a person

(30) Priorité: 29.08.2001 FR 0111215
(43) Date de publication de la demande: 05.03.2003
(73) Titulaire: L'Oréal, 75008 Paris (FR)
(72) Inventeur: Giron, Franck, 77164 Ferrieres (FR); Aubert, Johan, 75010 Paris (FR)
(74) Mandataire: Tanty, François

(56) Documents cités:
- WO-A-99/42900
- US-A- 2 085 180
- US-A- 2 309 390
- US-A- 4 144 556
- US-A- 4 297 724
- US-A- 4 911 544

## Description

La présente invention concerne les dispositifs d'acquisition d'au moins une image d'au moins une partie du visage ou de la chevelure d'un individu.

On connaît notamment par l'article Illumination and Source Engineering, SPIE Proceedings, Volume 3428, 1998 un dispositif comportant une sphère d'intégration sur laquelle sont fixées de puissantes lampes. Cette sphère comporte à l'avant une ouverture qui permet d'y introduire les objets à photographier. Des ventilateurs sont fixés sur la sphère, pour la refroidir compte tenu de la chaleur dégagée par les lampes. Un tel dispositif est relativement coûteux et n'est pas, à la connaissance de la société déposante, utilisé pour acquérir une image d'un visage placé dans l'ouverture de la sphère.

On connaît par US 4 911 544 un dispositif permettant d'observer le visage d'une personne. Un tel dispositif ne permet pas d'acquérir une image du visage porteuse d'une information colorimétrique précise, capable d'être enregistrée puis comparée ultérieurement à une autre image afin de déterminer une évolution entre les deux images, par exemple une altération du maquillage, ou capable d'être utilisée dans un traitement visant à détecter des défauts du visage tels que par exemple des rides ou des taches.

Il existe un besoin pour disposer d'un moyen relativement peu coûteux permettant d'acquérir d'une manière reproductible une image calibrée du visage ou d'une partie de celui-ci, ou d'une partie du corps ou de la chevelure, notamment afin d'évaluer la peau (en particulier son relief ou son homogénéité), les lèvres, les cils ou sourcils, les cheveux avant et/ou après l'application d'un produit cosmétique ou de soins.

L'invention répond à ce besoin grâce à un dispositif d'acquisition d'au moins une image d'au moins une partie du corps, du visage ou de la chevelure d'un individu, selon la revendication 1.

Grâce au dispositif de calibration, il est possible d'acquérir au moins une image calibrée, ce qui permet de connaître précisément la couleur ou la réflectance spectrale d'une partie du visage ou du corps.

Le fait que l'image soit calibrée rend plus aisée la détection d'une variation de couleur sur l'image.

Il est ainsi possible d'évaluer précisément, par exemple, l'homogénéité de la couleur de la peau, d'effectuer un traitement visant à localiser des défauts de la peau ou des poils, par exemple, d'évaluer les cernes, de fournir des informations concernant le collagène ou la mélanine.

Il est encore possible entre autres applications d'évaluer l'aspect d'un maquillage, la couvrance d'un produit ou sa tenue. L'invention peut être utile notamment pour évaluer l'homogénéité ou le relief de la peau, un maquillage ou un aspect de la chevelure, par exemple une coloration ou la tenue d'une laque. L'invention peut encore être utile pour déterminer l'absorption des UV par un produit solaire.

L'invention permet, du fait de la calibration, d'acquérir en un point de l'image des coordonnées colorimétriques dans un espace colorimétrique de référence, par exemple l'espace L*a*b* CIE 1976, et de mesurer en différents points d'une image ou entre deux images des écarts de couleur, d'angle de teinte ou de clarté, par exemple. De telles mesures peuvent être utiles notamment pour détecter des défauts du visage, par exemple. L'invention peut permettre de détecter des écarts de couleur relativement faibles, donc permet de cerner précisément le contour des défauts.

L'invention permet de fournir des coordonnées trichromatiques autres que R, G, B.

Le dispositif de calibration peut comporter par exemple au moins cinq surfaces présentant des propriétés optiques différentes, dont au moins trois surfaces correspondant à des niveaux de gris différents et au moins deux correspondant à des teintes différentes.

Le dispositif de calibration peut être configuré pour être rendu solidaire de l'enceinte seulement lors d'une étape de calibration. Le dispositif de calibration peut notamment être placé dans l'ouverture de l'enceinte préalablement à l'acquisition des images.

En variante, le dispositif de calibration peut être configuré pour être fixé en permanence sur l'enceinte.

Le dispositif de calibration peut encore être fixé sur la peau, par exemple au milieu du front, pendant l'acquisition d'une image.

Avantageusement, le dispositif d'acquisition comporte en outre des moyens de positionnement du visage de l'individu et/ou de fixation du dispositif de calibration.

De tels moyens de positionnement peuvent permettre à la personne qui doit être filmée ou photographiée de conserver, pendant l'acquisition des images, sensiblement la même pose.

En l'absence des moyens de positionnement précités, il serait plus difficile d'acquérir les images d'une manière reproductible, ce qui est important surtout lorsqu'il s'agit de comparer l'apparence d'une même personne avant et après traitement ou application d'un maquillage.

Dans une réalisation particulière, les moyens de positionnement comportent un support permettant un appui d'au moins une partie du visage. Ce support peut notamment, d'une part, être apte à servir d'appui au menton, et d'autre part, servir à la fixation du dispositif de calibration.

Toujours dans une réalisation particulière, les moyens de positionnement comportent un miroir placé dans l'enceinte, permettant à l'individu de voir son visage lorsque ce dernier est placé dans l'ouverture. L'enceinte peut être constituée par une sphère et le miroir être placé au-dessus d'une zone arrière diamétralement opposée à l'ouverture. Ce miroir peut présenter une surface réfléchissante non plane, pour agrandir des détails ou au contraire permettre d'élargir le champ visuel.

Les moyens de positionnement peuvent comporter au moins deux émetteurs de lumière aptes à générer des faisceaux lumineux croisés, dont le point de convergence se situe dans un plan où une partie prédéterminée du visage, par exemple le front, doit être positionnée. Ces émetteurs peuvent être agencés pour projeter chacun sur le front de l'individu une tâche lumineuse, la personne ayant sa tête dans l'ouverture de l'enceinte pouvant, grâce au miroir précité, voir les taches et corriger éventuellement sa position afin que les taches soient confondues.

Les moyens de positionnement peuvent encore comporter un dispositif télémétrique optique, à ultrasons ou infrarouge, sensible à la distance entre une partie prédéfinie du visage et un point de référence dont la position est connue par rapport à l'enceinte.

Les moyens de positionnement peuvent comporter au moins un indicateur sonore ou lumineux, visible ou audible depuis l'intérieur de l'enceinte, permettant de prévenir l'individu lorsque le positionnement est correct ou doit être modifié.

Le dispositif d'acquisition peut comporter au moins une caméra vidéo. Par « caméra vidéo », on désigne un appareil capable d'acquérir des images de manière sensiblement continue ou ponctuelle; « caméra vidéo » englobe tout aussi bien les caméras vidéo conventionnelles, permettant d'acquérir des images en lumière visible, infrarouge ou ultraviolette, les caméras spectrales ou spectroradiomètres, que les appareils photographiques numériques.

Le dispositif d'acquisition peut comporter au moins deux caméras vidéo, l'une pour observer le visage de l'individu sensiblement dans l'axe de l'ouverture et l'autre dans une direction faisant un angle avec cet axe, et de préférence le dispositif comporte trois caméras, dont une caméra frontale permettant d'observer le visage de l'individu sensiblement dans l'axe de l'ouverture et deux caméras latérales disposées sensiblement symétriquement de part et d'autre d'un plan médian contenant l'axe de l'ouverture, les caméras latérales étant destinées chacune à observer le visage de l'individu selon une direction faisant un angle avec l'axe de l'ouverture.

Le dispositif d'acquisition peut comporter au moins deux caméras configurées pour faire une acquisition du relief.

Dans une réalisation particulière, le dispositif de calibration comporte un support portant au moins deux étalons colorimétriques, de façon à les maintenir chacun dans le champ d'une caméra. Le support peut notamment porter trois étalons colorimétriques associés aux trois caméras précitées.

Dans une réalisation particulière, le dispositif de calibration comporte deux étalons colorimétriques latéraux fixés sur un support avec une possibilité de modifier leur orientation par rapport à l'axe de l'ouverture de l'enceinte. Ces deux étalons colorimétriques peuvent être maintenus en position par l'intermédiaire de glissières permettant de les rapprocher ou de les éloigner des caméras respectives dans le champ desquelles ils sont placés. Le dispositif de calibration peut encore comporter un étalon colorimétrique frontal.

Chaque étalon colorimétrique peut comporter au moins douze surfaces colorées servant de référence, et la calibration peut s'effectuer selon le procédé décrit dans la demande WO 97/44642.

Comme indiqué plus haut, l'enceinte peut présenter la forme générale d'une sphère, mais il ne s'agit que d'une forme préférentielle, et d'autres moyens peuvent encore être utilisés afin d'éclairer le visage de manière relativement homogène.

L'enceinte peut encore présenter au moins une portion de sa surface intérieure qui est cylindrique, de directrice circulaire ou non, de génératrice verticale ou non.

L'enceinte peut aussi comporter au moins un panneau, lequel peut être plan ou légèrement concave vers l'intérieur de l'enceinte.

L'enceinte peut notamment comporter au moins deux panneaux latéraux, lesquels peuvent être plans et parallèles ou former un angle entre eux. Selon l'angle formé entre les panneaux, l'ouverture de l'enceinte peut être plus ou moins grande.

L'enceinte peut être réalisée dans un matériau thermoformé, par exemple du plexiglas, revêtu intérieurement d'une peinture blanche, par exemple à base d'oxyde de titane. Il est ainsi possible de réaliser l'enceinte d'intégration à un coût relativement faible, l'enceinte présentant néanmoins des qualités optiques suffisantes pour l'application envisagée.

La ou les sources de lumière peuvent être des sources de lumière continue ou pulsée, par exemple de type lampe flash, polarisée ou non.

Avantageusement, la ou les sources lumineuses comportent des fibres optiques, pour acheminer la lumière émise par exemple par une lampe au xénon à l'enceinte d'intégration. Une telle disposition est avantageuse car elle permet d'éviter de fixer sur l'enceinte des lampes dégageant beaucoup de chaleur et des ventilateurs, et permet également d'éviter d'amener jusqu'à l'enceinte des conducteurs électriques véhiculant une tension élevée, ce qui permet de renforcer la sécurité vis-à-vis du personnel chargé des mesures et des personnes faisant l'objet des mesures.

Dans une réalisation particulière, les fibres optiques éclairent directement la surface intérieure de l'enceinte. Cette dernière peut ainsi être dépourvue d'écrans de diffusion placés devant les sources lumineuses, à l'intérieur de l'enceinte. Une telle disposition permet notamment de réduire le nombre de pièces constitutives et simplifie la fabrication du dispositif d'acquisition.

Avantageusement, au moins une source lumineuse est orientable, afin de pouvoir éclairer directement, si nécessaire, le visage de l'individu ayant placé sa tête dans l'ouverture de l'enceinte, ce qui permet notamment d'observer un effet de brillance. En particulier, les fibres optiques peuvent être reçues dans des embouts rotatifs permettant de modifier au besoin l'orientation de la lumière émise à l'intérieur de l'enceinte, en éclairant par exemple vers l'avant ou vers l'arrière. L'angle de divergence du faisceau lumineux émis par les fibres peut être compris par exemple entre 10 et 20°, étant par exemple voisin de 15°.

Le dispositif d'acquisition peut comporter un bâti supportant l'enceinte dans une région diamétrale. En l'absence de ventilateurs et de lampes fixées sur l'enceinte, cette dernière peut être relativement légère et le bâti n'a pas à être particulièrement renforcé.

L'invention a encore pour objet le dispositif de calibration défini plus haut, pris en lui-même.

L'invention a encore pour objet un procédé d'acquisition d'au moins une image d'une partie au moins du corps, du visage ou de la chevelure d'un individu, en utilisant un dispositif d'acquisition comportant une enceinte ayant une ouverture, notamment une ouverture suffisamment grande pour recevoir en entier le visage d'un individu, et au moins une source lumineuse placée dans l'enceinte, caractérisé par le fait qu'il comporte les étapes suivantes :
- calibrer au moins une caméra, notamment plusieurs caméras, en plaçant dans leur champ un dispositif de calibration colorimétrique ou spectrale, notamment un dispositif de calibration comportant plusieurs étalons colorimétriques,
acquérir au moyen de la caméra au moins une image d'une personne ayant introduit son visage ou une partie du corps ou de sa chevelure dans l'ouverture de l'enceinte.

Le dispositif de calibration peut être retiré avant d'acquérir l'image de la personne.

En variante, le dispositif de calibration peut être porté par la personne.

Dans une autre variante, le dispositif de calibration peut être laissé en place pendant l'acquisition de l'image de la personne.

On peut, selon un aspect de l'invention, générer des composantes trichromatiques d'au moins un point de l'image dans un espace colorimétrique autre que R, G, B.

Ces composantes trichromatiques peuvent être utiles pour effectuer par exemple des mesures de couleur, de brillance, de variation de couleur, de réflectance.

Dans un exemple de mise en oeuvre, on éclaire dans une première bande spectrale et l'on acquiert avec la caméra la lumière émise dans une deuxième bande spectrale, différente de la première. Cela peut permettre d'observer des phénomènes de fluorescence, par exemple.

Une telle fluorescence peut être due à la présence de pigments ou de colorants fluorescents dans une composition cosmétique ou à la présence d'un composé donné à la surface de la peau.

Selon un aspect de l'invention, on effectue un traitement de l'image de manière à détecter un défaut de la peau, par exemple, ce défaut se traduisant sur l'image par une variation de couleur.

D'autres caractéristiques et avantages de la présente invention ressortiront à la lecture de la description qui va suivre, d'exemples de mise en oeuvre non limitatifs de celle-ci, et à l'examen du dessin annexé, sur lequel :
- la figure 1 est une vue schématique et partielle, en perspective, d'une sphère conforme à l'invention,
- la figure 2 est une vue partielle et schématique de l'arrière de l'intérieur de la sphère de la figure 1,
- la figure 3 représente une personne en train de positionner son visage dans l'ouverture de la sphère,
- la figure 4 est une vue analogue à la figure 3, représentant le visage correctement positionné,
- la figure 5 est une coupe axiale schématique d'un embout de fixation d'une fibre optique sur la sphère,
- la figure 6 est une vue partielle de l'intérieur de la sphère, illustrant la position des embouts de fixation des fibres,
- la figure 7 représente de manière schématique un triptyque de calibration, en place sur la sphère,
- la figure 8 est une vue schématique en perspective représentant isolément le triptyque de la figure 7,
- la figure 9 représente un autre exemple de dispositif de calibration,
- la figure 10 illustre la fixation d'un dispositif de calibration sur le visage d'une personne, et
- les figures 11 et 12 illustrent des variantes de réalisation de l'enceinte.

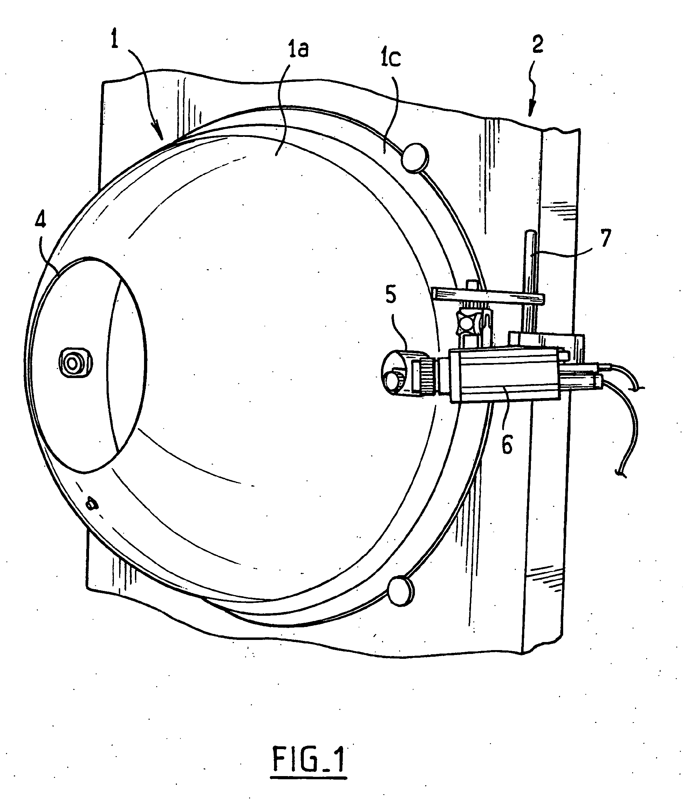

On a représenté sur la figure 1 une enceinte d'intégration 1 conforme à l'invention, supportée par un bâti 2. Cette enceinte 1 présente dans l'exemple considéré une forme de sphère, étant formée par l'assemblage de deux demi-sphères 1a et 1b, 1a première, à savoir la demi-sphère avant 1a, comportant une bride 1c permettant sa fixation sur le bâti 2, la deuxième étant emboîtée et fixée dans la première. La demi-sphère avant peut être amovible et retirée afin de permettre, le cas échéant, une prise de vue en éclairant l'individu avec la demi-sphère arrière 1b.

Le diamètre de la sphère 1 peut être voisin de 1 m, par exemple.

Dans l'exemple décrit, chaque demi-sphère 1a ou 1b est réalisée par thermoformage dans une matière thermoplastique, par exemple du plexiglas, au moyen d'une plaque métallique comportant une ouverture circulaire dont le diamètre correspond à celui de la demi-sphère à réaliser. La plaque de matière thermoplastique est plaquée contre une face d'un support métallique, chauffée, puis une dépression est créée du côté de l'autre face du support pour aspirer la plaque à travers l'ouverture circulaire, afin de former une cavité hémisphérique. Un tel procédé ne permet pas d'obtenir une parfaite sphéricité mais cette dernière est néanmoins suffisante pour l'application visée. Chaque demi-sphère 1a ou 1b est ensuite revêtue, sur sa surface intérieure, d'une peinture blanche, constituée dans l'exemple de réalisation décrit par une peinture utilisée pour peindre les ballons stratosphériques, présentant une bonne opacité, matité, et blancheur, par exemple la peinture à base d'oxyde de titane et de polyuréthane commercialisée sous la dénomination SKYMAP 32. La réflectivité de la surface intérieure de chaque demi-sphère est par exemple proche de 1 pour toutes les longueurs d'ondes qui sont utiles dans le cadre de la prise de vue.

Bien entendu, on ne sort pas du cadre de la présente invention lorsque d'autres peintures sont utilisées, par exemple des peintures à base de sulfate de baryum, notamment les peintures commercialisées sous la dénomination SPECTRALON, ou des peintures à base d'orthotitanate de zinc enrobé de silicone ou d'oxyde de zinc et de silicone.

La demi-sphère avant 1a est munie d'une ouverture frontale 4 permettant à un individu d'y passer la tête, comme cela sera précisé plus loin. Dans l'exemple de réalisation décrit, l'ouverture 4 est circulaire et de diamètre voisin de 40 cm.

La demi-sphère avant la comporte également deux ouvertures latérales 5, chacune de forme oblongue, allongée selon un axe horizontal. Chaque ouverture latérale 5 est associée à une caméra latérale 6 maintenue par une potence 7 solidaire du bâti 2. Chaque caméra latérale 6 permet d'observer de côté le visage de l'individu ayant passé son visage dans l'ouverture frontale 4. Les deux caméras 6 peuvent permettre, le cas échéant, d'effectuer une acquisition du relief du visage de l'individu.

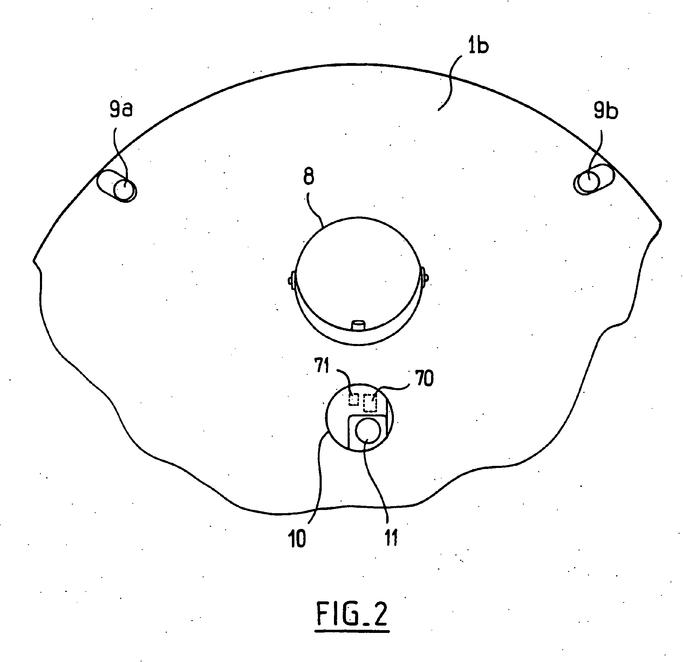

Si l'on se reporte maintenant à la figure 2, on voit que la demi-sphère arrière 1b est munie intérieurement d'un miroir 8 qui permet d'aider l'individu ayant passé sa tête dans l'ouverture 4 à positionner son visage dans celle-ci. Le miroir 8 permet en outre de vaincre l'appréhension que pourraient avoir certaines personnes à introduire leur tête dans un espace clos tel que la sphère.

Dans l'exemple de réalisation décrit, le miroir 8 est non plan, afin d'élargir le champ de vision.

La demi-sphère arrière 1b peut également être munie intérieurement de deux projecteurs 9a, 9b produisant des faisceaux lumineux croisés, dont le point de rencontre se situe dans le plan dans lequel on souhaite placer le front de l'utilisateur.

On voit sur la figure 2 que la demi-sphère arrière 1b comporte encore une ouverture 10 derrière laquelle est placée une caméra frontale 11 destinée à observer le visage de face. Le point de rencontre des faisceaux émis par les projecteurs 9a, 9b se situe dans le plan focal objet de la caméra 11.

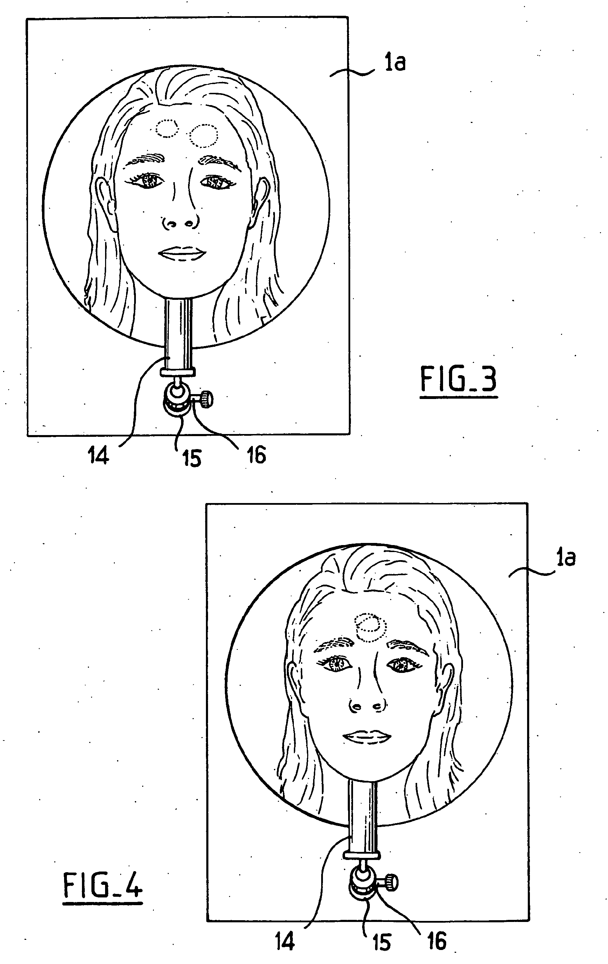

On a représenté sur la figure 3 un utilisateur qui n'est pas correctement positionné dans l'ouverture 4 et sur la figure 4 le même utilisateur correctement positionné. On peut voir sur la figure 3 que les faisceaux émis par les projecteurs 9a et 9b forment des taches distinctes sur le front de l'utilisateur. Lorsque le positionnement est correct, ces taches sont confondues, comme illustré sur la figure 4.

Les projecteurs 9a, 9b et le miroir 8 constituent un exemple de moyens de positionnement.

Dans l'exemple décrit, le dispositif d'acquisition comporte encore d'autres exemples de moyens de positionnement, à savoir un support 14 solidaire de la demi-sphère avant 1a, que l'on peut voir sur les figures 3 et 4.

Ce support 14 comporte dans l'exemple illustré un tronçon de tube, l'extrémité supérieure de ce dernier pouvant servir de surface d'appui au menton de l'utilisateur. Le support 14 est fixé sur la demi-sphère avant la par un élément de fixation comportant une partie 15 fixée dans un perçage de la demi-sphère avant la et une liaison à rotule pouvant être immobilisée au moyen d'une vis 16.

La sphère 1 est éclairée au moyen d'une source lumineuse comprenant plusieurs fibres optiques reliées à une source au xénon. La source au xénon peut être remplacée par tout type de source lumineuse, par exemple une lampe au mercure si nécessaire.

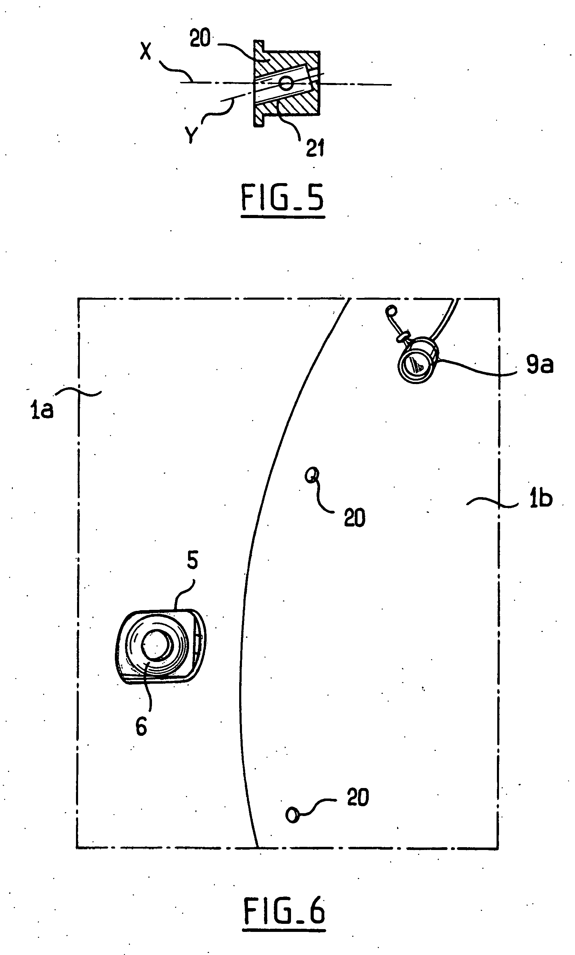

Chaque fibre optique est reçue à une extrémité dans un embout 20 que l'on a représenté isolément en coupe axiale schématique sur la figure 5. Cet embout 20 peut tourner par rapport à la sphère autour de son axe X et comporte un logement 21 d'axe Y, faisant dans l'exemple décrit un angle de 15 degrés par exemple avec l'axe X, dans lequel est fixée la fibre optique.

Le nombre d'embouts est suffisant, par exemple supérieur ou égal à huit, pour pouvoir avoir un éclairage homogène du visage introduit dans l'ouverture de la sphère 1. Ainsi, le positionnement du sujet dans l'ouverture devient moins critique.

En particulier, la lumière dans la sphère peut suivre la loi de Lambert.

Les fibres utilisées dans l'exemple considéré sont en verre, à transmission améliorée dans le bleu.

La température de couleur de la source lumineuse est par exemple choisie de manière à se rapprocher de l'illuminant D65. On peut encore utiliser une source lumineuse éclairant dans l'ultraviolet ou dans l'infrarouge. L'éclairage dans l'ultraviolet peut être utile notamment pour faire apparaître des signes du photo-vieillissement cutané et l'éclairage infrarouge des informations relatives à l'hydratation de la peau.

Dans l'exemple de réalisation décrit, la sphère 1 comporte huit embouts 20 disposés avec un espacement angulaire régulier sur une couronne dans un plan proche d'un plan diamétral. Grâce à la possibilité de faire tourner les embouts 20 autour de leur axe X de montage sur la sphère 1, il est possible de diriger la lumière émise par les fibres vers l'arrière ou l'avant de la sphère, selon l'éclairage souhaité. Ainsi, pour obtenir un éclairage diffus, les embouts seront orientés vers l'arrière de la sphère. Si l'on souhaite observer un effet de brillance, il suffit de faire tourner l'un des embouts 20 autour de son axe X de manière à ce que celui-ci éclaire directement le visage de l'individu.

Chaque fibre éclaire dans un angle solide qui correspond à son ouverture numérique. L'angle de divergence du faisceau émis par la fibre peut être voisin de 15° par exemple.

Préalablement à l'utilisation de la sphère 1 pour acquérir les images d'une personne ayant placé son visage dans l'ouverture 4, il est nécessaire de procéder à une calibration des caméras 6 et 11.

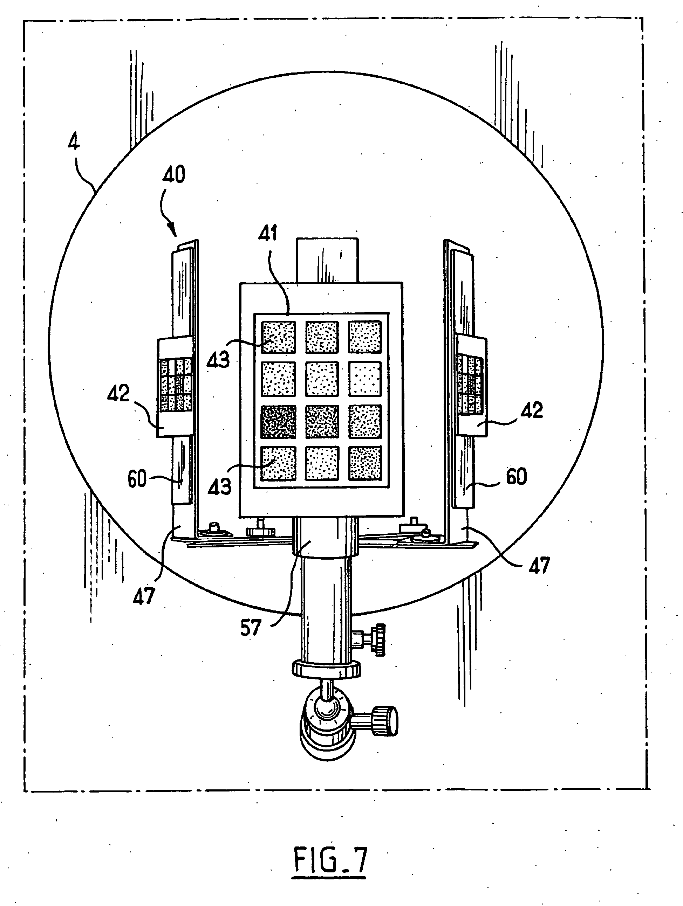

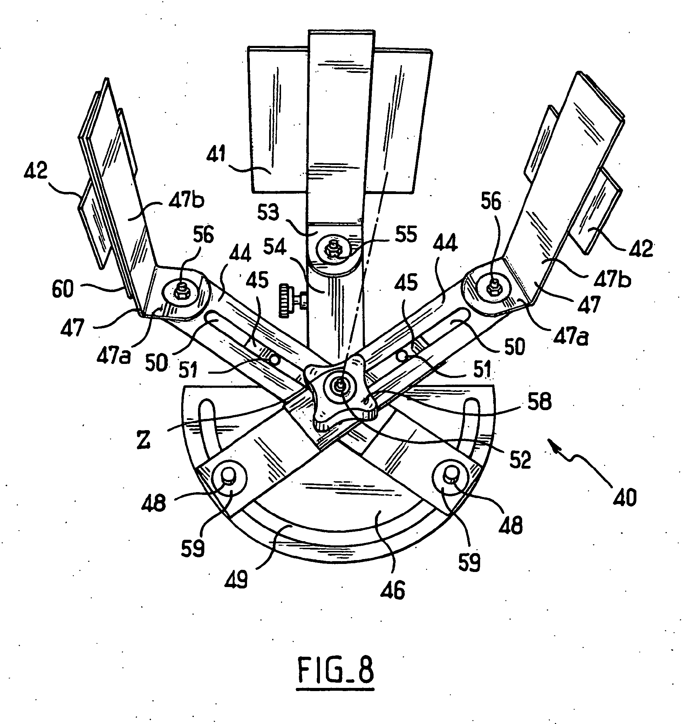

Pour ce faire, on utilise un triptyque de calibration 40 tel que celui représenté sur les figures 7 et 8. Le triptyque 40 comporte trois étalons colorimétriques, à savoir un étalon colorimétrique central 41 et deux étalons colorimétriques latéraux 42.

Chaque étalon colorimétrique 41 ou 42 comporte une pluralité de pastilles colorées 43, de couleurs différentes, au nombre de douze dans l'exemple considéré.

Chaque étalon colorimétrique latéral 42 est fixé sur une équerre de support 47, dont la base 47a est fixée à l'extrémité d'un bras 44. Ce dernier peut coulisser sur une tige plate de support 45, celle-ci pouvant pivoter sur un socle 46 autour d'un axe géométrique Z. Chaque tige 45 est munie à son extrémité opposée à l'étalon colorimétrique associé d'une vis 48 engagée dans une lumière demi-circulaire 49, retenue par une rondelle 59, comme on peut le voir plus particulièrement sur la figure 8. Chaque bras 44 comporte une lumière oblongue 50 dans laquelle coulisse un téton 51 porté par la tige plate 45. Un écrou 52 fixé dans une poignée 58, d'axe Z, permet d'immobiliser les bras 44 en coulissement sur les tiges plates 45 correspondantes et d'assurer le blocage dans l'orientation angulaire voulue autour de l'axe Z des bras 44. La présence de la lumière 49 et des vis 48 permet de régler précisément l'angle entre les bras 44 lorsque l'écrou 52 n'est pas serré.

Les bases 47a des équerres 47 sont fixées de manière articulée en 56 à l'extrémité des bras 44. L'étalon central 41 est fixé par l'intermédiaire d'une liaison articulée 55 sur une équerre 53 supportée par une tige plate 54 solidaire du socle 46. La tige 54 est solidaire d'un manchon 57 qui permet de fixer le socle 46 sur le support 14. Les montants verticaux 47b des équerres 47 sont munis chacun d'un barreau aimanté 60 et les étalons colorimétriques 42 comportent des cadres métalliques qui peuvent se fixer magnétiquement sur les barreaux 60. Il en est de même pour l'étalon colorimétrique central 41.

Lorsque le triptyque 40 est en place, comme illustré sur la figure 7, les caméras latérales 6 acquièrent chacune l'image d'un étalon colorimétrique latéral 42 tandis que la caméra frontale 11 acquiert une image de l'étalon colorimétrique central 41. L'utilisation du triptyque 40 facilite grandement les opérations de calibration puisqu'il suffit de mettre en place celui-ci sur le support 14 puis de procéder à la calibration, par exemple selon le procédé décrit dans la demande WO 97/44642, sans avoir à déplacer les étalons colorimétriques lors du calibrage des différentes caméras.

Dans l'exemple de la figure 7, le dispositif de calibration est amovible, étant utilisé pour calibrer la ou les caméras utilisées, puis retiré.

On ne sort pas du cadre de la présente invention lorsque le dispositif de calibration comporte au moins un étalon qui reste en place sur l'enceinte d'intégration après l'étape de calibration.

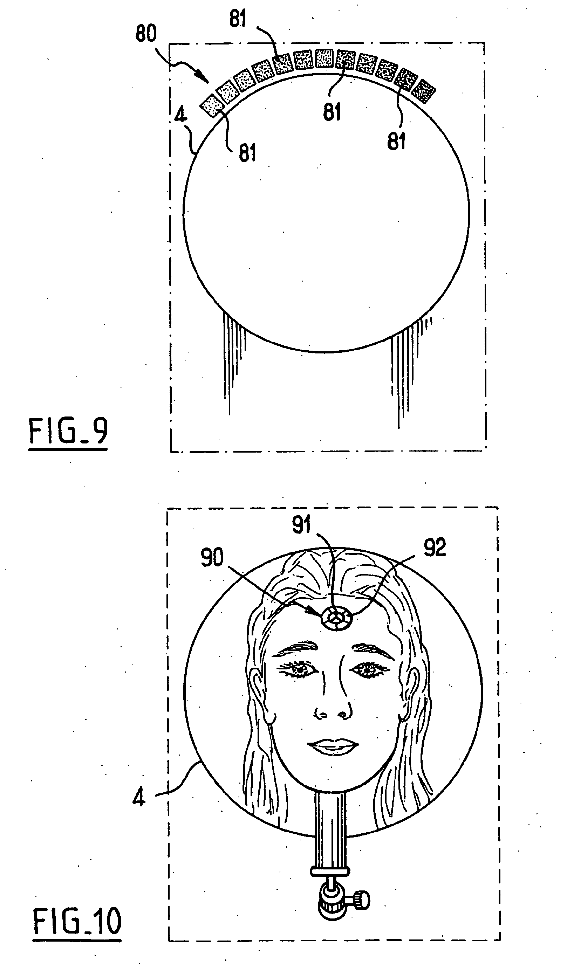

A titre d'exemple, on a représenté à la figure 9 un exemple de dispositif de calibration 80 présent à l'intérieur de la sphère même après l'étape de calibration initiale.

Ce dispositif de calibration 80 comporte par exemple plusieurs surfaces 81 disposées côte à côte le long d'un bord de l'ouverture 4, dans le champ d'observation de la ou des caméras utilisées.

Les surfaces 81 peuvent correspondre respectivement à plusieurs nuances de gris et à des couleurs différentes en lumière visible.

Les surfaces 81 peuvent encore être adaptées à permettre une calibration en lumière non visible, par exemple ultraviolette, notamment dans la gamme de longueurs d'onde 285-400 nm, ou infrarouge, notamment dans la gamme de longueurs d'onde 700-3000 nm.

Chaque surface 81 peut présenter une réflectance spectrale connue, les réflectances spectrales d'au moins deux surfaces 81 étant différentes. Le dispositif de calibration peut ainsi comporter, par exemple, une surface ayant une réflectance connue pour les UVA et une autre surface ayant une réflectance connue pour les UVB.

Le dispositif d'acquisition peut encore être configuré pour détecter une fluorescence, la bande spectrale d'éclairage étant différente de la bande spectrale d'émission. On peut par exemple émettre des UVA et observer dans le visible une couleur rouge ou orangée.

La fluorescence peut être utile pour détecter un composé ou une population bactérienne à la surface de la peau, par exemple, notamment un composé ou des bactéries liées à l'apparition de l'acné.

Les fibres optiques peuvent être remplacées par d'autres moyens d'éclairage, notamment par des diodes électroluminescentes fixées sur l'enceinte de calibration. On peut également utiliser plus ou moins de trois caméras, par exemple seulement la caméra frontale. D'autres moyens de prise de vue peuvent être utilisés. D'autres moyens de positionnement peuvent encore être utilisés, par exemple des moyens de positionnement comprenant un dispositif télémétrique 70 représenté de manière très schématique en pointillés sur la figure 2. Un tel dispositif peut comporter des capteurs de position sans contact, optiques, à infrarouges ou à ultrasons, associés éventuellement à un indicateur 71 lumineux ou sonore pour signaler et guider une personne lors du positionnement de son visage dans l'ouverture de l'enceinte.

Le dispositif de calibration peut encore être utilisé en étant disposé de manière amovible sur la personne introduisant son visage dans l'enceinte d'intégration, en étant par exemple collé sur le front de cette personne.

A titre d'exemple, on a représenté à la figure 10 un dispositif de calibration 90 comportant un support revêtu d'un adhésif permettant sa fixation amovible sur la peau, par exemple sur le front d'une personne introduisant sa tête dans l'ouverture 4.

Ce dispositif de calibration 90 comporte par exemple au moins trois surfaces apparentes correspondant à des niveaux de gris différents et au moins deux surfaces apparentes correspondant à des teintes différentes.

Dans l'exemple considéré, le dispositif de calibration 90 comporte une partie centrale 91 divisée en trois niveaux de gris différents et une région périphérique 92 comportant cinq secteurs ayant des couleurs différentes.

L'enceinte peut présenter une forme autre que celle qui est représentée à la figure 1.

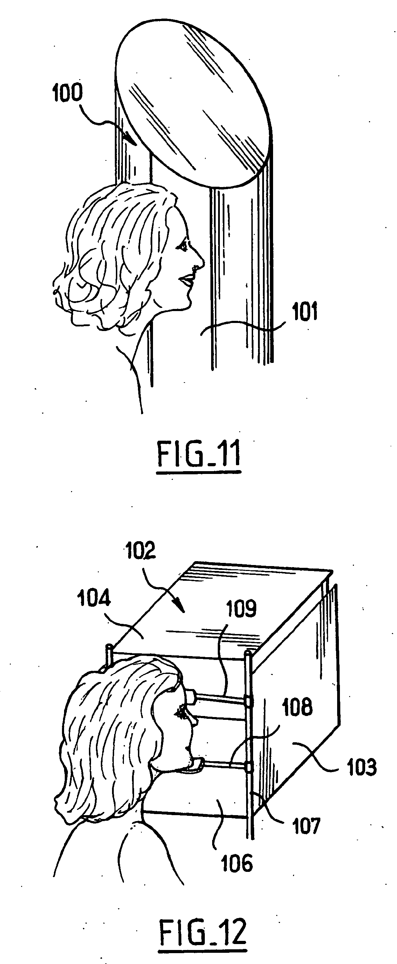

On peut notamment utiliser une enceinte 100 qui présente une surface intérieure cylindrique, de génératrice verticale par exemple, pourvue d'une ouverture 101 de forme générale rectangulaire, comme illustré à la figure 11.

On peut encore utiliser une enceinte 102 comportant deux panneaux latéraux 103, dont un seul est apparent sur la figure 12, un panneau supérieur 104, un panneau inférieur 106 ainsi qu'un panneau de fond non apparent. Les panneaux peuvent être non jointifs.

Le cas échéant, le panneau de fond est supprimé en formant un dièdre divergeant vers l'ouverture avec les panneaux latéraux.

Une structure 107 supportant des moyens de positionnement 108, 109 peut être associée à l'enceinte 102. Cette structure peut encore servir au maintien d'un dispositif de calibration.

Les informations acquises au moyen d'un dispositif selon l'invention peuvent encore être utilisées en vue de la fabrication d'un produit de maquillage ou de soin personnalisé, notamment un fond de teint ayant la même couleur que la peau.

Dans toute la description, y compris les revendications, l'expression « comportant un » doit être comprise comme étant synonyme de « comportant au moins un », sauf si le contraire est spécifié.

## Revendications

1. Dispositif d'acquisition d'au moins une image d'au moins une partie du corps, du visage ou de la chevelure d'un individu, comportant :
- une enceinte (1; 100 ; 102) pourvue d'une ouverture (4 ; 101) suffisamment grande pour recevoir en entier le visage d'un individu,
- au moins une source de lumière pour illuminer l'enceinte,
**caractérisé par le fait qu'**il comporte un dispositif de calibration colorimétrique ou spectral (40 ; 80 ; 90) et **par le fait qu'**il comporte au moins deux caméras vidéo (6 ; 11) pour observer respectivement le visage de l'individu sensiblement dans l'axe de l'ouverture (4) et dans une direction faisant un angle avec cet axe.

2. Dispositif selon la revendication 1, **caractérisé par le fait qu'**il comporte des moyens de positionnement (14 ; 9a, 9b ; 8 ; 108, 109) du visage de l'individu.

3. Dispositif selon la revendication 2, **caractérisé par le fait que** lesdits moyens de positionnement comportent un support (14) permettant un appui d'une partie au moins du visage.

4. Dispositif selon la revendication 3, **caractérisé par le fait que** ledit support (14) est apte à servir d'appui au menton.

5. Dispositif selon l'une quelconque des revendications 2 à 4, **caractérisé par le fait que** lesdits moyens de positionnement comportent un miroir (8) placé dans l'enceinte, permettant à l'individu de voir son visage lorsque ce dernier est placé dans l'ouverture (4).

6. Dispositif selon là revendication précédente, **caractérisé par le fait que** ladite enceinte est une sphère et **par le fait que** ledit miroir (8) est placé au-dessus d'une zone diamétralement opposée à l'ouverture.

7. Dispositif selon l'une des deux revendications immédiatement précédentes, **caractérisé par le fait que** ledit miroir (8) présente une surface réfléchissante non plane.

8. Dispositif selon l'une quelconque des revendications 2 à 7, **caractérisé par le fait que** lesdits moyens de positionnement comportent au moins deux émetteurs de lumière (9a, 9b) aptes à générer des faisceaux lumineux croisés, dont le point de convergence se situe dans un plan où une partie prédéterminée du visage doit être placée.

9. Dispositif selon la revendication précédente, **caractérisé par le fait que** lesdits émetteurs de lumière (9a, 9b) sont agencés pour projeter chacun sur le front de l'individu une tache lumineuse.

10. Dispositif selon l'une quelconque des revendications 2 à 9, **caractérisé par le fait que** lesdits moyens de positionnement comportent un dispositif télémétrique (70), sensible à la distance entre une partie prédéfinie du visage et un point de référence dont la position est connue par rapport à l'enceinte.

11. Dispositif selon l'une quelconque des revendications 2 à 10, **caractérisé par le fait que** lesdits moyens de positionnement comportent au moins un indicateur (71) lumineux ou sonore, visible ou audible depuis l'intérieur de celle-ci.

12. Dispositif selon l'une quelconque des revendications précédentes, **caractérisé par le fait qu'**il comporte trois caméras, dont une caméra frontale (11) permettant d'observer le visage de l'individu sensiblement dans l'axe de l'ouverture (4) et deux caméras latérales (6) disposées sensiblement symétriquement de part et d'autre d'un plan médian contenant l'axe de l'ouverture, pour observer le visage de l'individu selon une direction faisant un angle avec l'axe de l'ouverture.

13. Dispositif selon l'une quelconque des revendications précédentes, **caractérisé par le fait qu'**il comporte au moins deux caméras configurées pour effectuer une acquisition du relief.

14. Dispositif selon l'une quelconque des revendications précédentes, **caractérisé par le fait qu'**il comporte une caméra spectrale.

15. Dispositif selon l'une quelconque des revendications précédentes, **caractérisé par le fait qu'**il comporte au moins une source de lumière continue.

16. Dispositif selon l'une quelconque des revendications 1 à 14, **caractérisé par le fait qu'**il comporte au moins une source de lumière pulsée.

17. Dispositif selon l'une quelconque des revendications précédentes, **caractérisé par le fait que** le dispositif de calibration (90) comporte au moins cinq surfaces ayant des propriétés optiques différentes, dont au moins trois correspondent à des niveaux de gris différents et au moins deux correspondent à des teintes différentes.

18. Dispositif selon l'une quelconque des revendications précédentes, **caractérisé par le fait que** le dispositif de calibration (40) comporte un support portant au moins deux étalons colorimétriques de façon à les maintenir chacun dans le champ d'une caméra.

19. Dispositif selon la revendication 18, **caractérisé par le fait que** ledit support porte trois étalons colorimétriques (41,42).

20. Dispositif selon la revendication précédente, **caractérisé par le fait qu'**il comporte deux étalons colorimétriques (42) fixés sur un support avec une possibilité de modifier leur orientation par rapport à l'axe de l'ouverture de l'enceinte.

21. Dispositif selon l'une quelconque des revendications précédentes, **caractérisé par le fait que** le dispositif de calibration comporte deux étalons colorimétriques maintenus en position par l'intermédiaire de glissières permettant de les rapprocher ou de les éloigner des caméras respectives dans le champ desquelles ils sont placés.

22. Dispositif selon l'une quelconque des revendications 18 à 21, **caractérisé par le fait que** chaque étalon colorimétrique (41, 42) comporte au moins douze surfaces colorées servant de référence.

23. Dispositif selon l'une quelconque des revendications 1 à 17, **caractérisé par le fait que** le dispositif de calibration (40) est configuré pour être rendu solidaire de l'enceinte seulement lors d'une étape de calibration.

24. Dispositif selon l'une quelconque des revendications 1 à 17, **caractérisé par le fait que** le dispositif de calibration (80) est fixé sur l'enceinte en permanence.

25. Dispositif selon l'une quelconque des revendications 1 à 17, **caractérisé par le fait que** le dispositif de calibration (90) est configuré pour être fixé sur la peau.

26. Dispositif selon l'une quelconque des revendications précédentes, **caractérisé par le fait que** l'enceinte présente la forme générale d'une sphère (1).

27. Dispositif selon l'une quelconque des revendications 1 à 5 et 7 à 25, **caractérisé par le fait que** l'enceinte (100) présente au moins une portion de sa surface intérieure qui est cylindrique.

28. Dispositif selon l'une quelconque des revendications 1 à 5 et 7 à 25, **caractérisé par le fait que** l'enceinte (102) comporte au moins un panneau (103,104; 106).

29. Dispositif selon la revendication 28, **caractérisé par le fait que** l'enceinte (102) comporte au moins deux panneaux latéraux (103).

30. Dispositif selon l'une quelconque des revendications précédentes, **caractérisé par le fait que** l'enceinte est réalisée dans un matériau thermoformé.

31. Dispositif selon l'une quelconque des revendications précédentes, **caractérisé par le fait que** l'enceinte est revêtue intérieurement d'une peinture blanche.

32. Dispositif selon la revendication précédente, **caractérisé par le fait que** la peinture blanche est à base d'oxyde de titane.

33. Dispositif selon l'une quelconque des revendications précédentes, **caractérisé par le fait que** ladite au moins une source lumineuse comporte des fibres optiques.

34. Dispositif selon la revendication 33, **caractérisé par le fait que** les fibres optiques acheminent la lumière émise par une source au xénon à l'enceinte.

35. Dispositif selon l'une quelconque des revendications précédentes, **caractérisé par le fait que** ladite au moins une source lumineuse comporte des fibres optiques éclairant directement la surface intérieure de l'enceinte.

36. Dispositif selon l'une quelconque des revendications précédentes, **caractérisé par le fait que** l'enceinte est dépourvue d'écran de diffusion placé devant ladite au moins une source lumineuse, à l'intérieur de l'enceinte.

37. Dispositif selon l'une quelconque des revendications précédentes, **caractérisé par le fait que** l'enceinte comporte au moins huit sources lumineuses éclairant l'intérieur de l'enceinte.

38. Dispositif selon l'une quelconque des revendications précédentes, **caractérisé par le fait qu'**il comporte au moins une source lumineuse orientable, afin de pouvoir éclairer directement, si nécessaire, le visage de l'individu.

39. Dispositif selon l'une quelconque des revendications précédentes, **caractérisé par le fait que** l'enceinte est dépourvue de ventilateur.

40. Dispositif selon l'une quelconque des revendications 1 à 26 et 29 à 33 précédentes, **caractérisé par le fait que** l'enceinte (1) présente la forme générale d'une sphère et **par le fait que** le dispositif comporte un bâti de support qui supporte la sphère dans une région diamétrale.

41. Dispositif selon l'une quelconque des revendications précédentes, **caractérisé par le fait que** ladite au moins une source lumineuse éclaire dans l'ultraviolet.

42. Procédé d'acquisition d'au moins une image d'une partie au moins du corps, du visage ou de la chevelure d'un individu, en utilisant un dispositif d'acquisation selon l'une quelconque des revendications 1 à 41 **caractérisé par le fait qu'**il comporte les étapes suivantes :
- calibrer au moins une caméra en plaçant dans son champ un dispositif de calibration colorimétrique ou spectrale,
- acquérir au moins une image d'une personne ayant introduit son visage ou une partie du corps ou de sa chevelure dans l'ouverture de l'enceinte au moyen de la caméra.

43. Procédé selon la revendication 42, **caractérisé par le fait que** le dispositif de calibration est retiré avant d'acquérir l'image de la personne.

44. Procédé selon la revendication 42, **caractérisé par le fait que** le dispositif de calibration est porté par la personne.

45. Procédé selon la revendication 42, **caractérisé par le fait que** le dispositif de calibration est laissé en place pendant l'acquisition de l'image de la personne.

46. Procédé selon l'une quelconque des revendications 42 à 45, **caractérisé par le fait que** l'on génère des composantes trichromatiques d'au moins un point de l'image dans un espace colorimétrique autre que R, G, B.

47. Procédé selon l'une quelconque des revendications 42 à 46, **caractérisé par le fait que** l'on effectue un traitement de l'image de manière à détecter un défaut de la peau.

48. Procédé selon l'une quelconque des revendications 42 à 47, **caractérisé par le fait que** l'on éclaire dans une première bande spectrale et que l'on acquiert avec la caméra la lumière émise dans une deuxième bande spectrale, différente de la première.

## Claims

1. A device for acquiring at least one image of at least a portion of the body, the face or the hair of an individual, the device comprising:
an enclosure (1; 100; 102) provided with an opening (4; 101) large enough to receive an entire face of on individual;
at least one light source which illuminates the enclosure,
the device being **characterized by** the fact that it comprises a colorimetric or spectral calibration device (40; 80; 90) and by the fact that it comprises at least two video cameras (6; 11) for observing the face of an individual respectively substantially on the axis of the opening (4) and in a direction that is at an angle relative to said axis.

2. A device according to claim 1 **characterized by** the fact that it comprises means (14; 9a; 9b, 8; 108; 109) for positioning the face of the individual.

3. A device according to claim 2, **characterized by** the fact that said positioning means comprise a support (14) suitable for supporting at least a portion of the face.

4. A device according to claim 3, **characterized by** the fact that said support (14) is suitable for use as a chin rest.

5. A device according to any one of claims 2 to 4, **characterized by** the fact that said positioning means comprise a mirror (8) placed inside the enclosure, enabling the individual to see their face when it is in place in the opening (4).

6. A device according to the preceding claim, **characterized by** the fact that said enclosure is a sphere and by the fact that said mirror (8) is placed above a zone that is diametrically opposite the opening.

7. A device according to either one of the two immediately preceding claims, **characterized by** the fact that said mirror (8) presents a reflecting surface that is not plane.

8. A device according to any one of claims 2 to 7, **characterized by** the fact that said positioning means comprise at least two light emitters (9a, 9b) suitable for generating crossed light beams, the point of convergence of said beams being situated in a plane where a predetermined portion of the face is to be placed.

9. A device according to the preceding claim, **characterized by** the fact that said light emitters (9a, 9b) are arranged so that each of them projects a light spot on the individual's forehead.

10. A device according to any one of claims 2 to 9, **characterized by** the fact that said positioning means comprise a telemetry device (70) sensitive to the distance between a predefined portion of the face and a reference point of known position relative to the enclosure.

11. A device according to any one of claims 2 to 10, **characterized by** the fact that said positioning means comprise at least one light or sound indicator (71) that is visible or audible from inside the enclosure.

12. A device according to any preceding claim, **characterized by** the fact that it comprises three cameras, namely a front camera (11) for observing the face of the individual substantially on the axis of the opening (4), and two lateral cameras (6) disposed substantially symmetrically on either side of a midplane containing the axis of the opening in order to observe the face of the individual on directions that are at an angle with the axis of the opening.

13. A device according to any preceding claim, **characterized by** the fact that it comprises at least two cameras adapted to acquire relief images.

14. A device according to any preceding claim, **characterized by** the fact that it comprises a spectral camera.

15. A device according to any preceding claim, **characterized by** the fact that it comprises at least one continuous light source.

16. A device according to any one of claim 1 to 14, **characterized by** the fact that it comprises at least one pulsed light source

17. A device according to any preceding claim, **characterized by** the fact that the calibration device (90) comprises at least five surfaces having different optical properties, at least three of said surfaces corresponding to different gray levels and at least two of said surfaces corresponding to different shades.

18. A device according to any preceding claim, **characterized by** the fact that the calibration device (40) comprises a support carrying at least two color standards so as to hold each of them in the field of a camera.

19. A device according to claim 18, **characterized by** the fact that said support carries three color standards (41, 42).

20. A device according to the preceding claim, **characterized by** the fact that it comprises two color standards (42) fixed to a support with it being possible to modify their orientations relative to the axis of the opening of the enclosure.

21. A device according to any preceding claim, **characterized by** the fact that the calibration device comprises two color standards held in position by means of slideways enabling them to be moved towards or away from respective cameras in the fields of view of which they are placed.

22. A device according to any one of claims 18 to 21, **characterized by** the fact that each color standard (41, 42) comprises at least twelve color surfaces serving as references.

23. A device according to any one of claims 1 to 17, **characterized by** the fact that the calibration device (40) is configured to be coupled to the enclosure only during a calibration step.

24. A device according to any one of claims 1 to 17, **characterized by** the fact that the calibration device (80) is permanently fixed to said enclosure.

25. A device according to any one of claims 1 to 17, **characterized by** the fact that the calibration device (90) is configured to be coupled to the skin.

26. A device according to any preceding claim, **characterized by** the fact that the enclosure is generally spherical in shape (1).

27. A device according to any one of claims 1 to 5 and 7 to 25, **characterized by** the fact that at least a portion of an interior surface of the enclosure (100) is cylindrical.

28. A device according to any one of claims 1 to 5 and 7 to 25, **characterized by** the fact that the enclosure (102) includes at least one panel (103, 104; 106).

29. A device according to claim 28, **characterized by** the fact that the enclosure (102) includes at least two lateral panels (103).

30. A device according to any preceding claim, **characterized by** the fact that the enclosure is made of a thermoformed material.

31. A device according to any preceding claim, **characterized by** the fact that the enclosure is coated on the inside in white paint.

32. A device according to the preceding claim, **characterized by** the fact that the white paint is based on titanium oxide.

33. A device according to any preceding claim, **characterized by** the fact that said at least one light source comprises optical fibers.

34. A device according to claim 33, **characterized by** the fact that the optical fibers carry light emitted by a xenon source to the enclosure.

35. A device according to any preceding claim, **characterized by** the fact that at least one light source comprises optical fibers directly lighting the inside surface of the enclosure.

36. A device according to any preceding claim, **characterized by** the fact that the enclosure does not have any diffusion screen placed in front of at least one light source inside the enclosure.

37. A device according to any preceding claim, **characterized by** the fact that the enclosure has eight light sources lighting the inside of the enclosure.

38. A device according to any preceding claim, **characterized by** the fact that it comprises at least one steerable light source so as to be able to light the face of the individual directly, if necessary.

39. A device according to any preceding claim, **characterized by** the fact that the enclosure does not have a cooling fan.

40. A device according to any one of claims 1 to 26 and 29 to 39, **characterized by** the fact that the enclosure is generally spherical in shape and by the fact that the device includes a support structure which supports the sphere in a diametral region thereof.

41. A device according to any preceding claim, **characterized by** the fact that said at least one light source emits ultraviolet radiation.

42. A method of acquiring at least one image of at least a portion of the body, the face or the hair of an individual by using an acquisition device according to any one of claims 1 to 41, the method being **characterized by** the fact that it comprises the following steps:
- calibrating at least one camera by placing a spectral or colorimetric calibration device in the field of view of the camera;
- acquiring at least one image by means of a camera of an individual having the face, a portion of the body on the hair inside the opening of the enclosure.

43. A method according to claim 42, **characterized by** the fact that the calibration device is withdrawn before acquiring the image of the individual.

44. A method according to claim 42, **characterized by** the fact that the calibration device is born by the individual.

45. A method according to claim 42, **characterized by** the fact that the calibration device is left in place during said step of acquiring the image of the individual.

46. A method according to any one of claims 42 to 45, **characterized by** the fact that tricromatic components of at least one point in a colorimetric space, other than R, G, B are generated.

47. A method according to any one of claims 42 to 46, **characterized by** the fact that an analysis of said image is performed so as to detect a skin defect.

48. A method according to any one of claims 42 to 47, **characterized by** the fact that light is irradiated in a first spectral band; and by the fact that an image is acquired with the first camera in a second spectral band, different from said first spectral band.

## Patentansprüche

1. Vorrichtung zur Erfassung mindestens eines Bilds mindestens eines Teils des Körpers, des Gesichts oder des Haars einer Person, umfassend:
- eine Kammer (1; 100; 102), die mit einer Öffnung (4; 101) versehen ist, die groß genug ist, um das Gesicht einer Person ganz aufzunehmen,
- mindestens eine Lichtquelle zum Beleuchten der Kammer,
**dadurch gekennzeichnet, dass** sie eine Vorrichtung zur kolorimetrischen oder spektralen Kalibrierung (40; 80; 90) umfasst, und dadurch, dass sie mindestens zwei Videokameras (6; 11) umfasst, um das Gesicht der Person im Wesentlichen in der Achse der Öffnung (4) bzw. in einer Richtung zu beobachten, die mit dieser Achse einen Winkel bildet.

2. Vorrichtung nach Anspruch 1, **dadurch gekennzeichnet, dass** sie Mittel (14; 9a, 9b; 8; 108, 109) zur Positionierung des Gesichts der Person umfasst.

3. Vorrichtung nach Anspruch 2, **dadurch gekennzeichnet, dass** die Positionierungsmittel einen Halter (14) umfassen, der die Auflage mindestens eines Teils des Gesichts gestattet.

4. Vorrichtung nach Anspruch 3, **dadurch gekennzeichnet, dass** der Halter (14) geeignet ist, als Auflage für das Kinn zu dienen.

5. Vorrichtung nach einem der Ansprüche 2 bis 4, **dadurch gekennzeichnet, dass** die Positionierungsmittel einen in der Kammer angeordneten Spiegel (8) umfassen, der der Person gestattet, ihr Gesicht zu sehen, wenn dieses in der Öffnung (4) angeordnet ist.

6. Vorrichtung nach dem vorhergehenden Anspruch, **dadurch gekennzeichnet, dass** die Kammer eine Kugel ist, und dadurch, dass der Spiegel (8) über einer der Öffnung diametral entgegengesetzten Zone angeordnet ist.

7. Vorrichtung nach einem der beiden unmittelbar vorhergehenden Ansprüche, **dadurch gekennzeichnet, dass** der Spiegel (8) eine nicht ebene reflektierende Fläche aufweist.

8. Vorrichtung nach einem der Ansprüche 2 bis 7, **dadurch gekennzeichnet, dass** die Positionierungsmittel mindestens zwei Lichtsender (9a, 9b) umfassen, die geeignet sind, gekreuzte Lichtstrahlen zu erzeugen, deren Konvergenzpunkt in einer Ebene liegt, in der ein vorbestimmter Teil des Gesichts angeordnet werden soll.

9. Vorrichtung nach dem vorhergehenden Anspruch, **dadurch gekennzeichnet, dass** die Lichtsender (9a, 9b) angeordnet sind, um jeweils auf die Stirn der Person einen Lichtfleck zu projizieren.

10. Vorrichtung nach einem der Ansprüche 2 bis 9, **dadurch gekennzeichnet, dass** die Positionierungsmittel eine telemetrische Vorrichtung (70) umfassen, die für den Abstand zwischen einem vordefinierten Teil des Gesichts und einem Bezugspunkt, dessen Lage bezüglich der Kammer bekannt ist, empfindlich ist.

11. Vorrichtung nach einem der Ansprüche 2 bis 10, **dadurch gekennzeichnet, dass** die Positionierungsmittel mindestens eine Leucht- oder Tonanzeige (71) umfassen, die von ihrem Inneren aus sichtbar oder hörbar ist.

12. Vorrichtung nach einem der vorhergehenden Ansprüche, **dadurch gekennzeichnet, dass** sie drei Kameras umfasst, davon eine frontale Kamera (11), die die Beobachtung des Gesichts der Person im Wesentlichen in der Achse der Öffnung (4) gestattet, und zwei seitliche Kameras (6), die im Wesentlichen symmetrisch zu beiden Seiten einer die Achse der Öffnung enthaltenden Mittelebene angeordnet sind, zur Beobachtung des Gesichts der Person in einer Richtung, die mit der Achse der Öffnung einen Winkel bildet.

13. Vorrichtung nach einem der vorhergehenden Ansprüche, **dadurch gekennzeichnet, dass** sie mindestens zwei Kameras umfasst, die ausgebildet sind, um eine Erfassung des Reliefs vorzunehmen.

14. Vorrichtung nach einem der vorhergehenden Ansprüche, **dadurch gekennzeichnet, dass** sie eine Spektralkamera umfasst.

15. Vorrichtung nach einem der vorhergehenden Ansprüche, **dadurch gekennzeichnet, dass** sie mindestens eine kontinuierliche Lichtquelle umfasst.

16. Vorrichtung nach einem der Ansprüche 1 bis 14, **dadurch gekennzeichnet, dass** sie mindestens eine gepulste Lichtquelle umfasst.

17. Vorrichtung nach einem der vorhergehenden Ansprüche, **dadurch gekennzeichnet, dass** die Kalibrierungsvorrichtung (90) mindestens fünf Flächen mit verschiedenen optischen Eigenschaften umfasst, von denen mindestens drei verschiedenen Graustufen entsprechen und mindestens zwei verschiedenen Farbtönen entsprechen.

18. Vorrichtung nach einem der vorhergehenden Ansprüche, **dadurch gekennzeichnet, dass** die Kalibrierungsvorrichtung (40) einen Halter umfasst, der mindestens zwei kolorimetrische Standards so trägt, dass sie jeweils im Feld einer Kamera gehalten werden.

19. Vorrichtung nach Anspruch 18, **dadurch gekennzeichnet, dass** der Halter drei kolorimetrische Standards (41, 42) trägt.

20. Vorrichtung nach dem vorhergehenden Anspruch, **dadurch gekennzeichnet, dass** sie zwei kolorimetrische Standards (42) umfasst, die auf einem Halter mit einer Möglichkeit der Änderung ihrer Ausrichtung bezüglich der Achse der Öffnung der Kammer befestigt sind.

21. Vorrichtung nach einem der vorhergehenden Ansprüche, **dadurch gekennzeichnet, dass** die Kalibrierungsvorrichtung zwei kolorimetrische Standards umfasst, die in ihrer Stellung über Gleitführungen gehalten werden, die es gestatten, sie den Kameras, in deren Feld sie angeordnet sind, anzunähern oder sie von diesen zu entfernen.

22. Vorrichtung nach einem der Ansprüche 18 bis 21, **dadurch gekennzeichnet, dass** jeder kolorimetrische Standard (41, 42) mindestens zwölf farbige Flächen umfasst, die als Bezug dienen.

23. Vorrichtung nach einem der Ansprüche 1 bis 17, **dadurch gekennzeichnet, dass** die Kalibrierungsvorrichtung (40) ausgebildet ist, um mit der Kammer nur bei einem Kalibrierungsschritt fest verbunden zu sein.

24. Vorrichtung nach einem der Ansprüche 1 bis 17, **dadurch gekennzeichnet, dass** die Kalibrierungsvorrichtung (80) an der Kammer bleibend befestigt ist.

25. Vorrichtung nach einem der Ansprüche 1 bis 17, **dadurch gekennzeichnet, dass** die Kalibrierungsvorrichtung (90) ausgebildet ist, um auf der Haut befestigt zu werden.

26. Vorrichtung nach einem der vorhergehenden Ansprüche, **dadurch gekennzeichnet, dass** die Kammer die allgemeine Form einer Kugel (1) aufweist.

27. Vorrichtung nach einem der Ansprüche 1 bis 5 und 7 bis 25, **dadurch gekennzeichnet, dass** die Kammer (100) mindestens einen Abschnitt ihrer innenfläche aufweist, der zylindrisch ist.

28. Vorrichtung nach einem der Ansprüche 1 bis 5 und 7 bis 25, **dadurch gekennzeichnet, dass** die Kammer (102) mindestens eine Platte (103, 104; 106) umfasst.

29. Vorrichtung nach Anspruch 28, **dadurch gekennzeichnet, dass** die Kammer (102) mindestens zwei seitliche Platten (103) umfasst.

30. Vorrichtung nach einem der vorhergehenden Ansprüche, **dadurch gekennzeichnet, dass** die Kammer aus einem warmgeformten Werkstoff herstellt ist.

31. Vorrichtung nach einem der vorhergehenden Ansprüche, **dadurch gekennzeichnet, dass** die Kammer innen mit einem weißen Anstrich beschichtet ist.

32. Vorrichtung nach dem vorhergehenden Anspruch, **dadurch gekennzeichnet, dass** der weiße Anstrich auf Titanoxidbasis ist.

33. Vorrichtung nach einem der vorhergehenden Ansprüche, **dadurch gekennzeichnet, dass** die mindestens eine Lichtquelle optische Fasern umfasst.

34. Vorrichtung nach Anspruch 33, **dadurch gekennzeichnet, dass** die optischen Fasern das von einer Xenonquelle gesendete Licht zur Kammer befördern.

35. Vorrichtung nach einem der vorhergehenden Ansprüche, **dadurch gekennzeichnet, dass** die mindestens eine Lichtquelle optische Fasern umfasst, die die Innenfläche der Kammer direkt beleuchten.

36. Vorrichtung nach einem der vorhergehenden Ansprüche, **dadurch gekennzeichnet, dass** die Kammer nicht mit einem im Inneren der Kammer vor der mindestens einen Lichtquelle angeordneten Diffusionsschirm ausgerüstet ist.

37. Vorrichtung nach einem der vorhergehenden Ansprüche, **dadurch gekennzeichnet, dass** die Kammer mindestens acht Lichtquellen umfasst, die das Innere der Kammer beleuchten.

38. Vorrichtung nach einem der vorhergehenden Ansprüche, **dadurch gekennzeichnet, dass** sie mindestens eine verschwenkbare Lichtquelle umfasst, um nötigenfalls das Gesicht der Person direkt beleuchten zu können.

39. Vorrichtung nach einem der vorhergehenden Ansprüche, **dadurch gekennzeichnet, dass** die Kammer nicht mit einem Lüfter ausgerüstet ist.

40. Vorrichtung nach einem der vorhergehenden Ansprüche 1 bis 26 und 29 bis 33, **dadurch gekennzeichnet, dass** die Kammer (1) die allgemeine Form einer Kugel aufweist, und dadurch, dass die Vorrichtung ein Traggestell umfasst, das die Kugel in einem diametralen Bereich trägt.

41. Vorrichtung nach einem der vorhergehenden Ansprüche, **dadurch gekennzeichnet, dass** die mindestens eine Lichtquelle im Ultraviolett leuchtet.

42. Verfahren zur Erfassung mindestens eines Bilds mindestens eines Teils des Körpers, des Gesichts oder des Haars einer Person unter Verwendung einer Erfassungsvorrichtung nach einem der Ansprüche 1 bis 41, **dadurch gekennzeichnet, dass** es die folgenden Schritte umfasst:
- mindestens eine Kamera kalibrieren, indem in ihrem Feld eine Vorrichtung zur kolorimetrischen oder spektralen Kalibrierung angeordnet wird,
- mindestens ein Bild einer Person, die ihr Gesicht oder einen Teil des Körpers oder ihres Haars in die Öffnung der Kammer eingeführt hat, mit Hilfe der Kamera erfassen.

43. Verfahren nach Anspruch 42, **dadurch gekennzeichnet, dass** die Kalibrierungsvorrichtung vor der Erfassung des Bilds der Person zurückgezogen wird.

44. Verfahren nach Anspruch 42, **dadurch gekennzeichnet, dass** die Kalibrierungsvorrichtung von der Person getragen ist.

45. Verfahren nach Anspruch 42, **dadurch gekennzeichnet, dass** die Kalibrierungsvorrichtung während der Erfassung des Bilds der Person an ihrem Platz belassen wird.

46. Verfahren nach einem der Ansprüche 42 bis 45, **dadurch gekennzeichnet, dass** man trichromatische Komponenten mindestens eines Punkts des Bilds in einem anderen kolorimetrischen Raum als R, G, B erzeugt.

47. Verfahren nach einem der Ansprüche 42 bis 46, **dadurch gekennzeichnet, dass** man eine Bearbeitung des Bilds so vornimmt, dass ein Fehler der Haut erfasst wird.

48. Verfahren nach einem der Ansprüche 42 bis 47, **dadurch gekennzeichnet, dass** man in einem ersten Spektralband beleuchtet und dass man mit der Kamera das in einem zweiten, von dem ersten verschiedenen Spektralband gesendete Licht erfasst.
